# EUROPÄISCHE PATENTSCHRIFT

(11) **EP 1 884 845 B1**
(45) Veröffentlichungstag und Bekanntmachung des Hinweises auf die Patenterteilung: **02.03.2011**
(21) Anmeldenummer: 06015745.0
(22) Anmeldetag: 28.07.2006
(51) Int. Cl.: G05B 19/042, G05D 23/19

(54) **Versorgungszustands- und Wärmeleistungsregler sowie Schnittstelle hierfür**
Power status and heat regulator and interface for it
Régulateur de l'état d'alimentation et de la puissance calorifique ainsi qu'interface associée

(43) Veröffentlichungstag der Anmeldung: 06.02.2008
(73) Patentinhaber: Techem Energy Services GmbH, 65760 Eschborn (DE)
(72) Erfinder: Kähler, Arne, 12683 Berlin (DE)
(74) Vertreter: KEIL & SCHAAFHAUSEN Patentanwälte

(56) Entgegenhaltungen:
- WO-A-92/17830
- WO-A-03/052536
- GB-A- 2 059 646

## Beschreibung

Die Erfindung betrifft einen Versorgungszustands- und einen Wärmeleistungsregler sowie eine Schnittstelle zwischen diesen.

Ein Versorgungszustandsregler, welcher als auch Wärmeleistungsadaptionsmodul bezeichnet wird, dient der bedarfsgeführten Vorlauf- oder Massenstromregelung eines Gebäude- oder Heizkreisversorgungszustandes. Dazu erzeugt der Versorgungszustandsregler unter Berücksichtigung des Versorgungszustandes, welcher aus den aktuellen Wärmeverbrauch der einzelnen Heizflächen des Gebäudes oder Heizkreises repräsentierenden Messgrößen abgeleitet ist, einen Korrekturwert für einen Wärmeleistungsregler einer Heizungsanlage. Über einen Korrekturausgang des Versorgungszustandsreglers wird der Korrekturwert an einen Korrektureingang des Wärmeleistungsreglers übermittelt.

Bei der Versorgungszustandsregelung handelt es sich also um eine der herkömmlichen Wärmeleistungsregelung einer Heizungsanlage vorgelagerte Regelung, mit der die durch die Heizungsanlage zur Verfügung gestellte Heizungswärmeleistung entsprechend dem Versorgungszustand des Gebäudes bzw. Heizkreises wärmebedarfsgeführt eingestellt wird. Dazu kann der Versorgungszustandsregler insbesondere einen vorgegebenen Soll-Wert für den Versorgungszustand des Gebäudes oder Heizkreises mit einem aus aktuellen Messgrößen, bspw. Heizflächentemperaturwerten, Ventilhubstellungen der den einzelnen Heizflächen zugeordneten Ventilen oder dgl., ermittelten Ist-Wert für den Versorgungszustand vergleichen und in Abhängigkeit von einer möglichen Regelabweichung einen Korrekturwert über einen Korrekturausgang an den Wärmeleistungsregler übergeben.

Der Wärmeleistungsregler für eine Heizungsanlage dient insbesondere der Vorgabe der Vorlauftemperatur und/oder des Massenstromes als Stellgröße für einen Wärmeerzeuger der Heizungsanlage, der bspw. ein Heizkessel oder eine Fern-/Nahwärmestation sein kann. Dies geschieht üblicherweise in Abhängigkeit von Führungsgrößen, insbesondere der Außentemperatur. Zusätzlich weist der Wärmeleistungsregler einen Korrektureingang auf, der an einen Korrekturausgang des Versorgungszustandsreglers angeschlossen werden kann. Die Schnittstelle zwischen dem Versorgungszustandsregler und dem Wärmeleistungsregler wird also durch den Korrekturausgang des Versorgungszustandsreglers und den Korrektureingang des Wärmeleistungsreglers gebildet, die zur Übertragung von Spannungs- oder Stromsignalen verbunden sind.

Das Grundprinzip der wärmebedarfsgeführten Vorlauf- oder Massenstromregelung eines Gebäudes mittels einer der eigentlichen Wärmeleistungsregelung vorgeschalteten Versorgungszustandsregelung ist bereits aus der WO 03/052536 A2 bekannt.

Die WO 92/17830 A1 beschreibt allgemein ein analoge Schnittstelleneinheit zur Anpassung von analogen Ein- oder Ausgabesignalen. Ferner ist die Einheit mit einem Überspannungs- bzw. Überstromschutz aufgestattet, der die ausgegebenen Spannungswerte mit erwarteten Werten vergleicht. Die Schnittstelleneinheit kann an verschiedene Spannungsbereiche der angeschlossenen Geräte angepasst werden. Auch ist eine Sicherheitsfunktion integriert, welche eine externe Spannungsversorgung abschaltet, wenn eine externe Überspannung anliegt.

Aufgabe der vorliegenden Erfindung ist es nun, eine einfach realisierbare Schnittstelle zwischen dem Versorgungszustandsregler und dem Wärmeleistungsregler vorzusehen, die für eine Kommunikation zwischen verschiedenen Versorgungszustandsreglern und Wärmeleistungsreglern einfach angepasst werden kann und eine sichere Funktion ohne das Vorsehen aufwendiger Kommunikationsprotokolle ermöglicht.

Diese Aufgabe wird mit den Merkmalen der Ansprüche 1 und 7 gelöst. Dazu wird bei einem Versorgungszustandsregler der eingangs genannten Art vorgeschlagen, den Korrekturausgang als Strom- oder Spannungsschnittstelle auszubilden, welche einen vorgegebenen Signalbereich abdeckt. Der Signalbereich weist einen ersten Signalabschnitt auf, in dem ein von dem Versorgungszustandsregler vorgegebener Korrekturwert eindeutig einem Signalwert aus dem Signalbereich zugeordnet ist. Dabei sind die den ersten Signalabschnitt definierenden Parameter, insbesondere die Abschnittsgrenzen in dem Signalbereich, die Korrekturwertgrenzen für ein zu berücksichtigendes Korrekturwertintervall und der keine Korrektur erfordernde Korrekturnullwert, vorgebbar. Auf diese Weise ist es einfach möglich, innerhalb eines technisch als Strom- oder Spannungsbereich vorgegebenen Signalbereichs des Korrekturausgangs den für die Übermittlung des Korrekturwerts verwendeten Signalabschnitt des Korrekturwertausgangs an einen Korrekturwerteingang des Wärmeleistungsreglers anzupassen, der in der Praxis häufig fest vorgegeben ist. Die Parametrierung kann sowohl fest bei der Herstellung des Versorgungszustandsreglers vorgebbar oder später bspw. bei dessen Einbau durch Eingabe der Parameter konfigurierbar sein. Eine nachträgliche Konfigurierbarkeit bspw. für den Fall eines Austausches des Wärmeleistungsreglers innerhalb einer Heizungsanlage ist vorteilhaft. Hierauf kann im Rahmen der vorliegenden Erfindung jedoch auch verzichtet werden. Dies gilt insbesondere dann, wenn der Signalabschnitt in dem Signalbereich derart gewählt ist, dass er kleiner ist als der an dem Korrektureingang typischer Wärmeleistungsreglers zur Verfügung stehende Signalbereich, da der Korrekturausgang dann ohnehin für den Korrektureingang der meisten Wärmeleistungsregler geeignet ist.

Um zusätzlich zu dem Korrekturwert als solchem weitere Informationen über die Schnittstelle übertragen zu können, ist in dem Versorgungszustandsregler auch mindestens ein zweiter Signalabschnitt vorgesehen, dem eine Sonderfunktion zugeordnet ist. Dieser Signalabschnitt ist von dem ersten Signalabschnitt verschieden, so dass sich die insgesamt vorgesehenen Signalabschnitte den gesamten Signalbereich aufteilen. Sonderfunktionen können dabei bspw. Informationen wie Heizung ausschalten, Geräteausfall am Versorgungszustandsregler bzw. Wärmeadaptionsmodul oder ein Funktionsausfall vorgeschalteter Systemkomponenten sein. Der letztere Fall kann eine unzureichende hydraulische Versorgung in der Heizungsanlage oder sonstige Randbedingungen betreffen, die für die Funktionsfähigkeit des Systems erforderlich sind und im Rahmen der wärmebedarfsgeführten Versorgungszustandsregelung erkannt werden können.

Der zweite Signalabschnitt liegt vorzugsweise an einem Rand des Signalbereichs, um einen Geräteausfall des Versorgungszustandsreglers abzufangen, bei dem dieser bspw. kein Signal liefert, was häufig dem untersten Wert des Signalbereiches entspricht.

Zusätzlich weist der Signalbereich des Versorgungszustandsreglers einen dritten, von dem ersten und zweiten Signalabschnitt verschiedenen Signalabschnitt auf, der vorzugsweise an dem dem zweiten Signalabschnitt entgegengesetzten Rand des Signalbereiches liegt. Hierdurch kann auch ein Gerätedefekt des Versorgungszustandsreglers abgefangen werden, bei dem dieser bspw. aufgrund einer übersteuernden Elektronik einen maximalen Signalwert liefert. Alternativ kann auch der zweite Signalabschnitt in mehrere Unterabschnitte aufteilt sein. So kann bspw. der zweite Signalabschnitt einen ersten Signalabschnitt eines ungültigen Spannungsbereiches aufweisen, der einen Gerätefehler am Versorgungszustandsregler anzeigt, und einen zweiten Unterabschnitt, der die Information "Heizung ausschalten" übermittelt.

Der vorzugsweise an einem Rand des Signalbereiches liegende dritte Signalabschnitt kann auch in mehrere Unterabschnitte zur Zuweisung verschiedener Sonderfunktionen aufgeteilt sein.

Der als Strom- oder Spannungsschnittstelle ausgebildete Korrekturausgang kann diverse verschiedene Möglichkeiten zur Informationskodierung verwenden.

In einer einfachen Ausführungsform könnten für bestimmte Korrekturwertbereiche und Sonderinformationen diskrete Signalwerte vorgegeben werden. So könnte bspw. der erste Signalabschnitt des Signalbereiches in Form einer Dreipunktregelung ausgebildet werden, von denen der erste diskrete Signalwert einen höheren Wärmebedarf, der zweite diskrete Signalwert keine Änderung und der dritte diskrete Signalwert einen niedrigeren Wärmebedarf anzeigt. Im Falle des ersten oder dritten diskreten Signalwertes sorgt der Wärmeleistungsregler dann für eine Erhöhung bzw. Absenkung der Heizwärmeleistung der Heizungsanlage um einen vorgegebenen Betrag. Sollte die Veränderung der Heizwärmeleistung nicht ausreichend sein, erfolgt im Rahmen des Regelkreises eine weitere Anpassung.

Eine bessere und schnellere Regelung lässt sich dadurch erreichen, dass in dem ersten Signalabschnitt ein linearer Zusammenhang zwischen dem Korrekturwert und dem Signalwert besteht. Auf diese Weise wird die Genauigkeit bei der Nachführung des von dem Versorgungszustandsregler vorgegebenen Korrekturwertes bereits in einem Regeldurchlauf erhöht, so dass die Regelung insgesamt schneller arbeitet.

Es ist erfindungsgemäß ferner möglich, in dem ersten Signalabschnitt statt eines linearen Zusammenhanges einen gekrümmten Zusammenhang zwischen dem Korrekturwert und dem Signalwert vorzugeben, um in bestimmten Korrekturwertbereichen die Empfindlichkeit der Regelung zu erhöhen, bspw. durch Vorgabe eines steileren Kurvenverlaufes im Zentrum um den Korrekturnullwert und eines abgeflachten Kurvenverlaufs an den Rändern des Signalabschnitts. Die Vorgabe der Abbildung einer Korrekturwertgröße auf einen Signalwert kann einfacherweise durch geeignete Kennlinien vorgegeben werden.

In entsprechender Weise betrifft die Erfindung einen Wärmeleistungsregler nach Anspruch 7 für eine Heizungsanlage gemäß der eingangs genannten Art, bei dem der Korrektureingang als Strom- oder Spannungsschnittstelle ausgebildet ist, welche einen vorgegebenen Signalbereich abdeckt. Der Signalbereich weist einen ersten Signalabschnitt auf, in dem ein Signalwert aus dem Signalbereich eindeutig einem Korrekturwert zugeordnet ist. Die Strom- oder Spannungsschnittstelle des Korrektureingangs kann in vergleichbarer Weise zu der Strom- oder Spannungsschnittstelle des Korrekturausgangs des Versorgungszustandsreglers konfiguriert werden und insbesondere ebenso parametrierbar sein, so dass diesbezüglich auf die vorstehende Beschreibung verwiesen werden kann.

Insbesondere weist der Wärmeleistungsregler erfindungsgemäß mindestens einen zweiten Signalabschnitt auf, dem eine Sonderfunktion zugeordnet ist. Ebenso kann der Signalbereich einen dritten Signalabschnitt aufweisen. Der zweite und dritte Signalabschnitt können jeweils am entgegengesetzten Rand des Signalbereichs angeordnet sein. Zusätzlich oder alternativ kann der zweite Signalabschnitt in zwei oder mehr Unterabschnitte aufgeteilt werden. Natürlich ist optional auch eine Aufteilung des dritten Signalabschnitts in Unterabschnitte möglich.

In einer einfachen Ausführungsform der Erfindung können die Signalabschnitte des Korrekturausgangs des Versorgungszustandsreglers und des Korrektureingangs des Wärmeleistungsreglers sich genau entsprechen, d. h. insbesondere dieselben Abschnittsgrenzen aufweisen.

Vorzugsweise kann jedoch der erste Signalabschnitt des Korrektureingangs des Wärmeleistungsreglers größer als der erste Signalabschnitt des Korrekturausgangs des Versorgungszustandsreglers ausgebildet sein. Insbesondere kann der erste Signalabschnitt des Korrekturwerteingangs an jeder Seite über den ersten Signalabschnitt des Korrekturausgangs überstehen. Hierdurch lassen sich Fehlinterpretationen am Rande des ersten Signalabschnittes bei geringen Strom- oder Spannungsfluktuationen vermeiden, da der Korrektureingang den Signalwert des Korrekturausgangs in jedem Fall umfassen sollte. Diese Vorgehensweise kann auch auf die weiteren Signalabschnitte übertragen werden.

Dies hat zur Folge, dass die Signalabschnitte (und -unterabschnitte) in dem Signalwertbereich des Korrekturwertausgangs nicht mehr unmittelbar aneinander angrenzen. Statt dessen sind an den Rändern der Signalabschnitte Bereiche vorgesehen, deren Signalwerte nicht durch den Korrekturausgang erzeugt werden, um bei Fluktuationen an dem Signalwerteingang Fehlinterpretationen der Signalwerte zu vermeiden.

Ferner können an dem unteren und/oder oberen Rand des Signalbereiches Grenzwerte für ungültige Signalwerte vorgebbar sein, welche durch den Wärmeleistungsregler als fehlerhafte Korrekturwerte interpretiert und entsprechend verarbeitet werden. Diese Grenzwerte können einstellbar sein.

Erfindungsgemäß kann die Schnittstelle zwischen dem vorbeschriebenen Versorgungszustandsregler und dem Wärmeleistungsregler derart ausgebildet sein, dass die Signalstelle durch Vorgabe einer Kennlinie für den Versorgungszustandsregler und einer Kennlinie für den Wärmeleistungsregler realisiert ist, mit der jeweils die zuvor beschriebenen Eigenschaften des Korrekturausgangs und des Korrektureingangs umgesetzt werden. Jeweils eine der Kennlinien ist daher dem Versorgungszustand- bzw. dem Wärmeleistungsregler zugeordnet und auch ein Merkmal dieser Geräte. Für die Umsetzung der Kennlinien, d. h. die Umrechnung eines Korrekturwertes in einen Signalwert bzw. umgekehrt, sind in dem Versorgungszustandsregler und dem Wärmeleistungsregler jeweils eine geeignete Logik insbesondere eines Mikroprozessors, vorgesehen.

Derartige Kennlinien sind besonders einfach parametrierbar, so dass durch die Vorgabe der Kennlinien und die Eingabemöglichkeit geeigneter Kennlinienparameter eine leichte Anpassung der Schnittstelle für verschiedene Versorgungszustandsregler und/oder Wärmeleistungsregler möglich ist. Die in dem Versorgungszustandsregler bzw. dem Wärmeleistungsregler vorhandene Logik setzt die Kennlinien dann geeignet um und erzeugt die dem Kennlinienverlauf entsprechenden Signale.

Die Parameter können insbesondere einen Korrekturnullwert, Korrekturwertgrenzen, Abschnittsgrenzen, Grenzen für ungültige Signalwerte und Parameter zur Beschreibung der Kennlinienform (lineare oder gekrümmte Kennlinien) in dem ersten Signalabschnitt sein. Der Korrekturnullwert ist der ausgezeichnete Korrekturwert, bei dem aufgrund der Versorgungszustandsregelung keine Korrektur der zur Verfügung gestellten Wärmeleistung erfolgen muss, sowie die Zuordnung dieses Wertes zu einem Signalwert.

In einer besonders bevorzugten Ausführungsform wird die Signalschnittstelle zwischen dem Korrekturwertausgang des Versorgungszustandsreglers und dem Korrekturwerteingang des Wärmeleistungsreglers durch eine Zwei-DrahtLeitung gebildet, auf der kontinuierliche Strom- und Spannungswerte innerhalb des Signalbereiches auf einfache Weise übertragen werden können. Grundsätzlich kann die Signalschnittstelle auch durch eine Drei- oder Mehrdrahtleitung realisiert sein, insbesondere bei der zuvor beschriebenen Drei- oder Mehrpunktregelung. Dies ermöglicht eine besonders kostengünstige Realisierung der Schnittstelle, da auf Seiten des Wärmeleistungsreglers auf eine logische Auswertung des Signals (im Sinne eines Kommunikationsprotokolls) weitgehend verzichtet werden kann. Ein vollständiger Verzicht auf eine Auswertungslogik in dem Korrekturwerteingang kann erfolgen, wenn jeweils eine eigene Leitung der Schnittstelle für jeden Schaltzustand vorgesehen ist, so dass auf Seiten des Wärmeleistungsreglers lediglich noch Schaltfunktionen ausgeführt werden müssen.

Weitere Vorteile, Merkmale und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Es zeigen:
- Fig. 1: einen Regelkreis zur wärmebedarfsgeführten Vorlauf- oder Massenstromregelung mit der erfindungsgemäßen Schnittstelle;
- Fig. 2: Kennlinien des Korrekturausgangs und des Korrektureingangs gemäß einer ersten Ausführungsform der Schnittstelle;
- Fig. 3: Kennlinien des Korrekturwertausgangs und des Korrekturwerteingangs gemäß einer zweiten Ausführungsform der Schnittstelle; und
- Fig. 4: Kennlinien des Korrekturwertausgangs und des Korrekturwerteingangs gemäß einer dritten Ausführungsform der Schnittstelle.

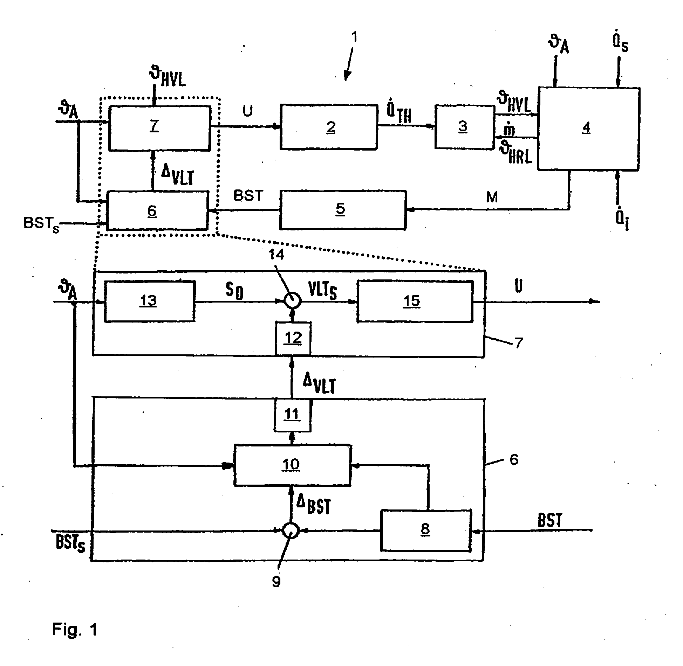

In Fig. 1 ist der Regelkreis 1 einer wärmebedarfsgeführten Vorlauf- oder Massenstromregelung eines Gebäude- oder Heizkreisversorgungszustands BST in einer Übersicht dargestellt.

Die Heizungsanlage 3 eines Gebäudes weist einen Wärmeerzeuger 2 auf, der ein herkömmlicher Heizkessel oder eine Fern-/Nahwärmestation sein kann und der zentralen Heizungsanlage 3 eine Heizwärmeleistung *Q̇_{TH}* zur Verfügung stellt. Die Heizungsanlage 3 führt dem aus einzelnen Heizflächen gebildeten Heizungssystem des Gebäudes bzw. Heizkreises einen Massenstrom *ṁ* mit einer Vorlauftemperatur ϑ*_{HVL}* zu. Die nicht dargestellten einzelnen Heizflächen werden üblicherweise durch eine autarke Raumtemperaturregelung 4 geregelt. Diese häufig als Einzelraumregelungen umgesetzte Raumtemperaturregelung 4 stellt in den Räumen die gewünschte Temperatur ein und berücksichtigt dabei insbesondere die Außentemperatur ϑ_{A} , eine solare Wärmeleistung *Q̅̇̅*ₛ und eine internen Wärmeleistung *Q̅̇̅*_{i̇}.

Dazu kann die Einzelraumtemperaturregelung 4 durch einen elektrischen Stellantrieb auf die Ventilstellungen der Ventile der einzelnen Heizflächen einwirken. Zur Umsetzung der wärmebedarfsgeführten Versorgungszustandsregelung kann die Positionen der einzelnen Ventilstellungen erfasst und ausgewertet werden. Dies ist ausführlich in der WO 03/052536 A2 beschrieben. Alternativ kann die Einzelraumtemperaturregelung 4 auch durch herkömmliche, mechanisch wirkende Thermostatventile gebildet sein, die die Wirkung der Außentemperatur ϑ_{A}, der solaren Wärmeleistung *Q̅̇̅ₛ* und der internen Wärmeleistung *Q̅̇̅ᵢ* implizit durch einen Vergleich der Umgebungstemperatur der Heizfläche mit der gewünschten Solltemperatur berücksichtigen. In diesem Fall werden für die Versorgungszustandsregelung verschiedene Heizflächentemperaturen erfasst, die insbesondere im Rahmen einer Heizkostenerfassung ohnehin gemessen werden. Ein derart realisierter Regelkreis 1 ist in der EP 1 645 928 A1 beschrieben.

Aus den aktuellen Wärmeverbrauch der einzelnen Heizflächen des Gebäude- oder Heizkreises repräsentierenden Messgrößen M, welche die Ventilstellungen der Ventile der einzelnen Heizflächen oder Temperaturwerte der einzelnen Heizflächen sein können, ermittelt ein Versorgungszustandsanalysator 5 den Versorgungszustand BST des gesamten Heizkreises bzw. Gebäudes, wie in der WO 03/052536 A2 und der EP 1 645 928 A1 ausführlich beschrieben.

Dieser Versorgungszustand BST wird einem Versorgungszustandsregler 6 zugeleitet, der hieraus einen Korrekturwert Δ*_{VLT}* bspw. der Vorlauftemperatur ermittelt und diesen dem Wärmeleistungsregler 7 zuleitet. Der Wärmeleistungsregler 7 bestimmt in Abhängigkeit von einer gemessenen Außentemperatur ϑ*_{A}* und/oder der in dem Heizungssystem herrschenden Vorlauftemperatur ϑ*_{HVL}* eine Stellgröße U, die dem Wärmeerzeuger 2 zur Erzeugung der für die Heizungsanlage 3 benötigten Wärmemenge sorgt. Bei der Ermittlung der Stellgröße U berücksichtigt der Wärmeleistungsregler 7 auch die Korrekturgröße Δ*_{VLT}* des Versorgungszustandsreglers 6.

Die Funktionsweise des Versorgungszustandsreglers 6 und des Wärmeleistungsreglers 7. sind in der durch den gepunkteten Bereich angezeigten, vergrößerten Darstellung von Fig. 1 detailliert gezeigt.

Als Eingangsgrößen werden dem Versorgungszustandsregler 6 der aktuelle Versorgungszustand BST und ein Sollversorgungszustand BST_{S} zugeführt, wobei der aktuelle Versorgungszustand BST ggf. in einem Filter 8 geglättet wird. An dieser Stelle sei darauf hingewiesen, dass der Versorgungszustandsanalysator 5 und der Versorgungszustandsregler 6 nicht notwendigerweise in zwei getrennten Modulen vorgesehen sein müssen, sondern in einem einzigen Modul zusammengefasst sein können.

Der aktuelle Versorgungszustand BST und der Sollversorgungszustand BST_{S} werden in einem Differenzmodul 9 zu einer Regelabweichung Δ*_{BST}* des Versorgungszustands BST verarbeitet, die der eigentlichen Reglereinheit 10 des Versorgungszustandsreglers 6 zuleitet wird. Zusätzlich werden der Reglereinheit 10 als weitere Informationen die Außentemperatur ϑ*_{A}* und der aktuelle Versorgungszustand BST übermittelt. Hieraus erzeugt die Reglereinheit 10 mittels einer geeigneten Regelung, wie sie in der WO 03/052536 A2 und der EP 1 645 928 A1 ausführlich beschrieben sind, einen Korrekturwert Δ*_{VLT}*, der im Falle einer Vorlauftemperaturregelung als Wärmeleistungsregler 7 ein Vorlauftemperaturkorrekturwert ist.

Dieser Korrekturwert Δ*_{VLT}* wird über den Korrekturausgang 11 des Versorgungszustandsreglers 6 ausgegeben und einem Korrektureingang 12 des Wärmeleistungsreglers 7 zugeführt. Die aus dem Korrekturausgang 11 und dem Korrektureingang 12 gebildete Schnittstelle zwischen dem Versorgungszustandsregler 6 und dem Wärmeleistungsregler 7 wird als Strom- bzw. Spannungsschnittstelle betrieben, welche einen vorgegebenen Signalbereich von bspw. 0 bis 10 Volt oder 0 (4) bis 20 mA umfasst. Innerhalb dieses Signalbereichs ist ein erster Signalabschnitt vorgesehen, in dem der Korrekturwert Δ*_{VLT}* eindeutig einem Signalwert Σ aus dem Signalbereich zugeordnet ist. Dieser als Spannungs- oder Stromwert definierte Signalwert Σ wird über eine Zwei-Draht-Verbindung dem Korrektureingang 12 zugeführt.

In dem Wärmeleistungsregler 7 wird das Korrektursignal Δ*_{VLT}* mit einem aufgrund einer Außentemperatur ϑ*_{A}* geführten Basis-Heizungsfahrkurve 13 erzeugten externen Sollwert S₀ in einem Summiermodul 14 zu einem Sollwert für die Wärmeleistungsregelung VLT_{S} addiert. Dieser Sollwert VLT_{S} wird in der Reglereinheit 15 des Wärmeleistungsreglers 7 zur Erzeugung der Stellgröße U verarbeitet.

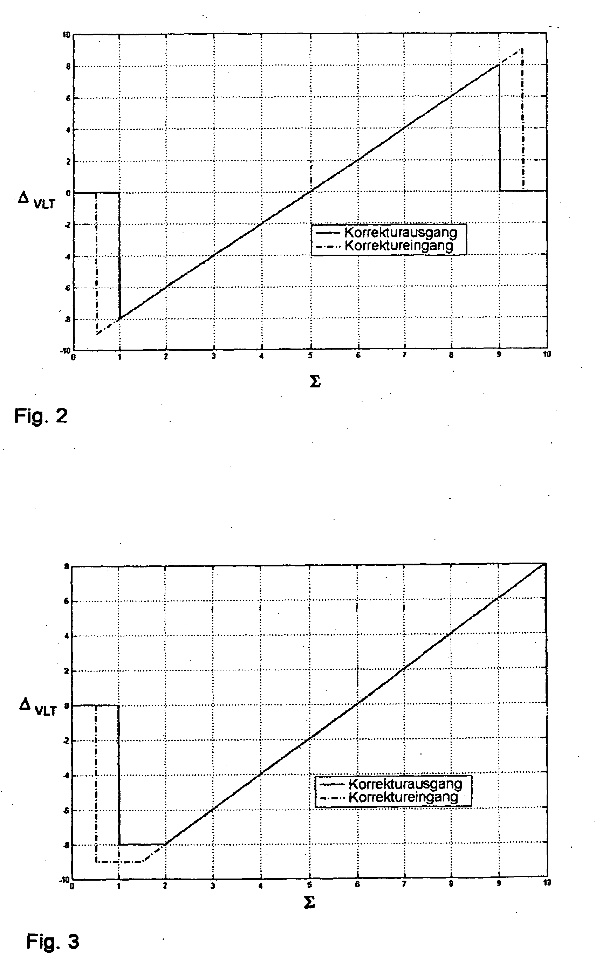

Nachfolgend wird die Funktion der Schnittstelle 11, 12 zwischen dem Versorgungszustandsregler 6 und dem Wärmeleistungsregler 7 anhand der in den Figuren 2 bis 4 dargestellten Kennlinien des Korrekturausgangs 11 und des Korrektureingangs 12 näher erläutert. Die Figuren 2 bis 4 stellen jeweils den Korrekturwert Δ*_{VLT}* in Abhängigkeit von dem Signalwert Σ des Korrekturausgangs 11 bzw. des Korrektureingangs 12 dar, wie er von der Schnittstelle 11, 12 zwischen dem Versorgungszustandsregler 6 und dem Wärmeleistungsregler 7 verwendet wird. Die Einheiten sind beliebig gewählt, für den Korrekturwert Δ*_{VLT}* bspw. als Vorlauftemperatur in °C und für den Signalwert Σ in Volt bei einer Spannungsschnittstelle oder mA bei einer Stromschnittstelle. Die dargestellten Kennlinien sind jeweils mit durchgezogener Linie für den Korrekturausgang 11 und mit gestrichelter Linie für den Korrektureingang 12 übereinander dargestellt.

In Fig. 2 ist eine Schnittstellenkonfiguration gezeigt, in welchem der Signalbereich der Strom- oder Spannungsschnittstelle 11, 12 zehn Einheiten umfasst. Der erste Signalabschnitt des Korrekturausgangs 11, in dem ein Korrekturwert Δ*_{VLT}* eindeutig einem Signalwert Σ aus dem Signalbereich zugeordnet ist, reicht von den Signalwerten Σ = 1 bis 9, welche die Abschnittsgrenzen des ersten Signalabschnittes des Korrekturausgangs 11 darstellen. Zwischen diesen Abschnittsgrenzen des ersten Signalabschnittes werden die Korrekturwerte zwischen den Korrekturwertgrenzen Δ*_{VLT}*= +8 und -8 linear auf die Signalwerte Σ = 1 und 9 abgebildet. Der Korrekturnullwert liegt bei einem Korrekturwert Δ*_{VLT}* = 0 und einem entsprechenden Signalwert Σ = 5, so dass in dem ersten Signalabschnitt eine lineare Abbildung zwischen den Korrekturwerten Δ*_{VLT}* und den Signalwerten Σ erfolgt.

Die Signalwerte Σ zwischen den Abschnittsgrenzen Σ = 0 und 1 bzw. Σ = 9 und 10 des Korrekturausgangs 11 entsprechen einem zweiten Signalabschnitt am unteren Rand des Signalbereichs und einem dritten Signalabschnitt am oberen Rand des Signalbereichs. Diese zweiten und dritten Signalabschnitte sind für den Korrekturausgang 11 ungültige Signalwertbereiche, wobei ein Signalwert Σ = 0 auftritt, wenn der Versorgungszustandsregler 6 ausgefallen ist, ein Kabelbruch aufgetreten ist oder die Versorgungsspannung insgesamt ausfällt.

Ein maximaler Signalwert Σ = 10 kann bspw. bei einem Elektronikdefekt in dem Versorgungszustandsregler 6 auftreten, der dazu führt, dass der maximale Signalwert aus dem verfügbaren Signalbereich ausgegeben wird.

Würde der erste Signalabschnitt, der zur Übermittlung des Korrekturwertes Δ*_{VLT}* genutzt wird, sich bis zu diesen maximalen Signalwerten erstrecken, würde dies im Falle eines Signalwertes Σ = 0 zu einem immer weiteren Absenken des Sollwertes für die Wärmeleistungsregelung und damit zu einer dramatischen Unterversorgung der Wärmeleistung in einem Gebäude führen. Mit entsprechend umgekehrtem Vorzeichen würde ein Signalwert Σ = 10 in diesem Fall zu einem immer weiteren Ansteigen des Sollwertes für die Wärmeleistungsregelung und einer Überhitzung führen. Durch das Vorsehen des zweiten und dritten Signalabschnittes mit ungültigen, nicht für die Übertragung des Korrekturwertes Δ*_{VLT}* genutzten Signalwerten Σ, können derartige Fehler also abgefangen werden.

Die Kennlinie des Korrektureingangs 12 weist einen in etwa vergleichbaren Verlauf zu der Kennlinie des Korrekturausgangs 11 mit einem ersten Signalabschnitt zwischen den Signalwerten Σ = 0,5 bis 9,5, einem zweiten Signalabschnitt mit einem ungültigen Signalwertbereich zwischen den Signalwerten Σ = 0 bis 0,5 und einem dritten Signalabschnitt mit einem ungültigen Signalwertbereich zwischen den Signalwerten Σ = 9,5 und 10 auf. In diesen Bereichen ist der Korrekturwert jeweils als Δ*_{VLT}* = 0 definiert.

Bei der Interpretation eines Signalwertes Σ in dem Wärmeleistungsregler 7 wird also einem Signalwert Σ aus dem ungültigen zweiten oder dritten Signalabschnitt ein Korrekturwert Δ*_{VLT}* = 0 zugeordnet, so dass keine Korrektur der externen Basis-Heizungsfahrkurve mit dem externen Sollwert S₀ erfolgt. Diese findet bei einem Ausfall der wärmebedarfsgeführten Vorlauf- oder Massenstromadaption daher unkorrigiert Anwendung und ein Ausfall des Versorgungszustandsreglers 6 führt zu keinem vollständigen Ausfall der Heizungsregelung. Lediglich die energetisch besonders günstige Wärmeleistungsadaption kann dann nicht mehr vorgenommen werden.

In dem Bereich zwischen den Signalwerten Σ = 1 bis 9 sind die Kennlinien des Korrekturausgangs 11 und des Korrektureingangs 12 deckungsgleich. Der erste Signalabschnitt des Korrektureingangs 12 ist jedoch größer als der erste Signalabschnitt des Korrekturausgangs 11 und überragt diesen an dessen Abschnittsenden (Signalwerte Σ = 1 bis 9) um ein gewisses Stück, wobei die Kennlinienform der Kennlinie des Korrekturausgangs 11 mit gleicher Steigung fortgeführt wird.

Hierdurch wird erreicht, dass es bei Signalwerten Σ = 0,5 und 1 bzw. Σ = 9 und 9,5 an dem Korrektureingang 12, die bspw. aufgrund von Spannungs- oder Stromfluktuationen in der Schnittstelle 11, 12 auftreten können, nicht zu einem Ausfall des Systems kommt. Vielmehr werden in dem Korrektureingang 12 des Wärmeleistungsreglers 7 die im Wesentlichen richtigen Korrekturwerte Δ*_{VLT}* erkannt, auch wenn die dort festgestellte Spannung bzw. der dort festgestellte Strom bei Signalwerten zwischen Σ = 0,5 und 1 bzw. Σ = 9 und 9,5 liegen.

Durch das in Fig. 2 dargestellte Kennlinienpaar wird daher eine einfache und robuste Kommunikationsschnittstelle zwischen dem Korrekturausgang 11 des Versorgungszustandreglers 6 und dem Korrektureingang 12 des Wärmeleistungsreglers 7 realisiert, in der als zusätzliche Informationen ein Gerätedefekt erkannt werden kann.

Die in Fig. 1 und 2 dargestellten Kennlinien eignen sich bspw. für eine Spannungsschnittstelle.

Fig. 3 zeigt ein Kennlinienpaar für den Korrekturausgang 11 und den Korrektureingang 12, welches im Wesentlichen ähnlich zu dem in Fig. 2 dargestellten Kennlinienpaar aufgebaut ist. Die als durchgezogene Linie dargestellte Kennlinie des Korrekturausgangs weist einen ersten Signalabschnitt auf, der in den Signalbereich zwischen den Signalwerten Σ = 2 bis 10 liegt und einen Korrekturwert Δ*_{VLT}* wie bekannt linearer auf einen Signalwert Σ abbildet.

An der unteren Abschnittsgrenze 2 des ersten Signalabschnittes schließt sich ein zweiter Signalabschnitt an, der Abschnittsgrenzen zwischen Σ = 0 und 2 aufweist. Dieser zweite Signalabschnitt ist in einen ersten Unterabschnitt mit den Unterabschnittsgrenzen Σ = 1 bis 2 und einen zweiten Unterabschnitt mit den Unterabschnittsgrenzen Σ = 0 bis 1 aufgeteilt.

In dem ersten Unterabschnitt wird der Korrekturwert konstant auf Δ*_{VLT}* = -8 gehalten. Dieser Korrekturwert Δ*_{VLT}* in dem Heizkreis bzw. Gebäude soll ein so hohes Wärmeüberangebot anzeigen, dass die Heizung ausgeschaltet werden kann. Der dem Korrekturwert von Δ*_{VLT}* = -8 entsprechende Signalbereich Σ = 1 bis 2 gibt also die Funktion "Heizung aus" wieder. In dem Unterabschnitt mit den Unterabschnittsgrenzen Σ = 0 bis 1 wird wiederum der aus Fig. 2 bekannte Signalbereich mit ungültigen Signalwerten abgebildet, der insbesondere einen Geräteausfall des Versorgungszustandsreglers 6 anzeigt.

Die Kennlinie des Korrektureingangs 12 verläuft in dem ersten Signalabschnitt wiederum deckungsgleich mit der Kennlinie des Korrekturausgangs 11, wobei der erste Signalabschnitt des Korrektureingangs 12 an seinem unteren Rand aus den bereits diskutierten Gründen wieder größer ist als der erste Signalbereich des Korrekturausgangs 11, so dass die untere Abschnittsgrenze des ersten Signalabschnittes des Korrektureingangs 12 bei Σ = 0,5 liegt und die Kennlinie bis dahin linear verlängert ist.

Im unteren Bereich schließt sich ein weiterer Signalabschnitt an, der analog zu der Kennlinie des Korrekturausgangs 11 in zwei Unterabschnitte eingeteilt ist, wobei der erste Unterabschnitt von den Unterabschnittsgrenzen Σ = 0,5 bis 1,5 reicht und einen Korrekturwert Δ*_{VLT}* = -9 erzeugt, der die Sonderfunktion "Heizung ausschalten" aktiviert. Der zweite Unterabschnitt in den Unterabschnittsgrenzen Σ = 0 bis 0,5 zeigt einen Geräteausfall des Versorgungszustandsreglers 6 an und gibt einen Korrekturwert Δ*_{VLT}* = 0 an, so dass die wärmeleistungsadaptive Versorgungszustandsregelung bei der Heizungsregelung deaktiviert ist.

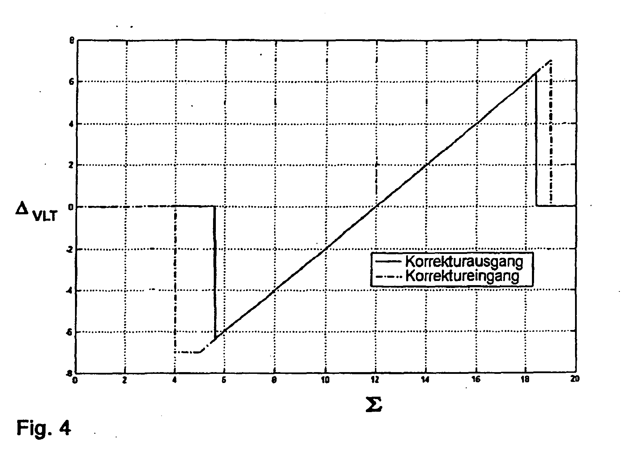

In Fig. 4 sind die Kennlinienfunktionen von Fig. 2 und Fig. 3 kombiniert umgesetzt, so dass sowohl ein oberer und unterer Signalabschnitt mit einem ungültigen Signalbereich als auch die Sonderfunktion "Heizung aus" realisiert sind. Der zweite Signalabschnitt mit den Abschnittsgrenzen zwischen Σ = 0 und 5,5 für den Korrekturausgang 11 bzw. Σ = 0 und 5 für den Korrektureingang 12 ist dabei so groß gewählt, dass in dem Signalwertebereich zwischen Σ = 0 und 5 weitere Sonderinformationen übermittelt und von der Wärmeleistungsregelung 7 ausgewertet werden können. Die in Fig. 4 dargestellte Kennlinie bietet sich bspw. für eine Stromschnittstelle an.

Die erfindungsgemäß vorgeschlagene Signalschnittstelle mit einem Korrekturausgang 11 und einem Korrektureingang 12 ist besonders auf die Anforderungen einer Kommunikationsschnittstelle zwischen einem Versorgungszustandsregler 6 und einem Wärmeleistungsregler 7 zugeschnitten, indem sie insbesondere mehrere, durch Parameter der Kennlinien frei programmierbare Signalabschnitte aufweist, durch die die Kommunikation zwischen einem Versorgungszustandsregler 6 und einem Wärmeleistungsregler 7 an die jeweiligen Gerätespezifikationen einfach angepasst werden kann. Trotzdem bietet die Kommunikationsschnittstelle 11, 12 die Möglichkeit, durch das Vorsehen mehrerer Signalabschnitte wichtige Zusatzfunktionen, wie insbesondere Gerätedefekte oder eine "Heizung aus" -Anweisung, mit zu übertragen, so dass auch bei Ausfall der wärmebedarfsgeführten Versorgungszustandsregelung ein zuverlässiger Weiterbetrieb der Heizungsanlage als solcher gewährleistet ist und das Einsparpotential optimal ausgenutzt wird.

### Bezugszeichenliste:

- 1: Regelkreis einer wärmebedarfsgeführten Vorlauf-/Massenstromregelung
- 2: Wärmeerzeuger
- 3: zentrale Heizungsanlage
- 4: Raumtemperaturregelung
- 5: Versorgungszustandsanalysator
- 6: Versorgungszustandsregler
- 7: Wärmeleistungsregler
- 8: Filter
- 9: Differenzmodul
- 10: Reglereinheit
- 11: Korrekturausgang
- 12: Korrektureingang
- 13: Basis-Heizungsfahrkurve
- 14: Summiermodul
- 15: Reglereinheit

- *Q̇_{TH}*: Heizwärmeleistung
- *ṁ*: Massenstrom
- *ϑ_{HVL}*: Vorlauftemperatur
- *ϑ_{HRL}*: Rücklauftemperatur
- *ϑ_{A}*: Außentemperatur
- *Q̇_{S}*: solare Wärmeleistung
- *Q̇ᵢ*: interne Wärmeleistung
- M: Messgrößen
- BST: Versorgungszustand
- BST_{S}: Sollversorgungszustand
- Δ*_{BST}*: Regelabweichung
- VLT_{S}: Sollwert für die Wärmeleistungsregelung
- Δ*_{VLT}*: Korrekturwert für die Wärmeleistungsregelung
- S₀: externer Sollwert der Basis-Heizungsfahrkurve
- U: Stellgröße
- Σ: Signalwert

## Patentansprüche

1. Versorgungszustandsregler zur wärmebedarfsgeführten Vorlauf- oder Massenstromregelung eines Gebäude- oder Heizkreisversorgungszustandes, wobei der Versorgungszustandsregler (6) unter Berücksichtigung des Versorgungszustands (BST), welcher aus den aktuellen Wärmeverbrauch der einzelnen Heizflächen des Gebäudes oder Heizkreises repräsentierenden Messgrößen (M) abgeleitetet ist, einen Korrekturwert (Δ*_{VLT}*) für einen Wärmeleistungsregler (7) einer Heizungsanlage (3) erzeugt und einen Korrekturausgang (11) aufweist, welcher an einen Korrektureingang (12) des Wärmeleistungsreglers (7) anschließbar ist, **dadurch gekennzeichnet, dass** der Korrekturausgang (11) als Strom- oder Spannungsschnittstelle ausgebildet ist, welche einen vorgegebenen Signalbereich abdeckt, wobei der Signalbereich einen ersten Signalabschnitt, in dem ein Korrekturwert (Δ*_{VLT}*) eindeutig einem Signalwert (Σ) aus dem Signalbereich zugeordnet ist, und einen zweiten Signalabschnitt aufweist, dem eine Sonderfunktion zugeordnet ist, wobei der Signalbereich einen dritten Signalabschnitt aufweist und/oder der zweite Signalabschnitt in mehrere Unterabschnitte zur Zuweisung verschiedener Sonderfunktionen aufgeteilt ist.

2. Versorgungszustandsregler nach Anspruch 1, **dadurch gekennzeichnet, dass** der zweite Signalabschnitt an einem Rand des Signalbereichs liegt.

3. Versorgungszustandsregler nach Anspruch 2, **dadurch gekennzeichnet, dass** der dritte Signalabschnitt an dem dem zweiten Signalabschnitt entgegengesetzten Rand des Signalbereichs liegt.

4. Versorgungszustandsregler nach einem der vorhergehenden Ansprüche, **dadurch gekennzeichnet, dass** der dritte Signalabschnitt in mehrere Unterabschnitte zur Zuweisung verschiedener Sonderfunktionen aufgeteilt ist.

5. Versorgungszustandsregler nach einem der vorhergehenden Ansprüche, **dadurch gekennzeichnet, dass** in dem ersten Signalabschnitt ein linearer Zusammenhang zwischen dem Korrekturwert (Δ*_{VLT}*) und dem Signalwert (Σ) besteht.

6. Versorgungszustandsregler nach einem der Ansprüche 1 bis 4, **dadurch gekennzeichnet, dass** in dem ersten Signalabschnitt ein gekrümmter Zusammenhang zwischen dem Korrekturwert (Δ*_{VLT}*) und dem Signalwert (Σ) besteht.

7. Wärmeleistungsregler für eine Heizungsanlage (3) insbesondere zur Vorgabe der Vorlauftemperatur (*ϑ_{HVL}*) und/oder des Massenstroms *(ṁ)* als Stellgröße (U) für einen Wärmeerzeuger (2) der Heizungsanlage (3) in Abhängigkeit von Führungsgrößen (ϑ_{A}), wobei der Wärmeleistungsregler (7) einen Korrektureingang (12) zum Anschluss an einen Korrekturausgang (11) eines Versorgungszustandsreglers (6) nach einem der Ansprüche 1 bis 7 aufweist, **dadurch gekennzeichnet, dass** der Korrektureingang (12) als Strom- oder Spannungsschnittstelle ausgebildet ist, welche einen vorgegebenen Signalbereich abdeckt, wobei der Signalbereich einen ersten Signalabschnitt, in dem ein Signalwert (Σ) aus dem Signalbereich eindeutig einem Korrekturwert (Δ*_{VLT})* zugeordnet ist, und einen zweiten Signalabschnitt aufweist, dem eine Sonderfunktion zugeordnet ist, wobei der Signalbereich einen dritten Signalabschnitt aufweist und/oder der Signalabschnitt in mehrere Unterabschnitte aufgeteilt ist.

8. Wärmeleistungsregler nach Anspruch 7, **dadurch gekennzeichnet, dass** der dritte Signalabschnitt in mehrere Unterabschnitte aufgeteilt ist.

9. Wärmeleistungsregler nach einem der Ansprüche 7 oder 8, **dadurch gekennzeichnet, dass** der erste Signalabschnitt des Korrektureingangs (12) des Wärmeleistungsreglers (7) größer ist als der erste Signalabschnitt des Korrekturausgangs (11) des Versorgungszustandsreglers (6).

10. Wärmeleistungsregler nach einem der Ansprüche 7 bis 9, **dadurch gekennzeichnet, dass** an dem unteren und/oder oberen Rand des Signalbereichs ein Grenzwert für ungültige Signalwerte (Σ) vorgebbar ist.

11. Signalschnittstelle zwischen einem Versorgungszustandsregler (6) gemäß einem der Ansprüche 1 bis 6 und einem Wärmeleistungsregler (7) gemäß einem der Ansprüche 7 bis 10, **dadurch gekennzeichnet, dass** die Signalschnittstelle (11, 12) durch Vorgabe einer Kennlinie für den Versorgungszustandsregler (6) und einer Kennlinie für den Wärmeleistungsregler (7) realisiert ist.

12. Signalschnittstelle nach Anspruch 11, **dadurch gekennzeichnet, dass** die Parameter der Kennlinien einstellbar sind.

13. Signalschnittstelle nach Anspruch 11 oder 12, **dadurch gekennzeichnet, dass** die Signalschnittstelle zwischen dem Korrekturausgang (11) des Versorgungszustandsreglers (6) und dem Korrektureingang (12) des Wärmeleistungsreglers (13) durch eine Zweidrahtleitung gebildet wird.

## Claims

1. A supply state controller for the heating-requirement-guided flow or mass flow regulation of a building or heating circuit supply state, wherein, taking the supply state (BST), which is derived from measured values (M) representing the current heat consumption of the individual heating surfaces of the building or heating circuit, into account, the supply state controller (6) generates a correction value (Δ*_{VLT}*) for a thermal output controller (7) of a heating plant (3) and has a correction output (11) which can be connected to a correction input (12) of the thermal output controller (7), **characterised in that** the correction output (11) is constructed as a current or voltage interface which covers a predetermined signal range, wherein the signal range has a first signal section, in which a correction value (Δ*_{VLT}*) is uniquely assigned to a signal value (E) from the signal range, and has a second signal section, to which a special function is assigned, wherein the signal range has a third signal section and/or the second signal section is divided into a plurality of subsections for assigning various special functions.

2. The supply state controller according to Claim 1, **characterised in that** the second signal section lies at an edge of the signal range.

3. The supply state controller according to Claim 2, **characterised in that** the third signal section lies at the edge of the signal range opposite the second signal section.

4. The supply state controller according to any one of the preceding claims, **characterised in that** the third signal section is divided into a plurality of subsections for assigning various special functions.

5. The supply state controller according to any one of the preceding claims, **characterised in that** there is a linear relationship between the correction value (Δ*_{VLT}*) and the signal value (Σ) in the first signal section.

6. The supply state controller according to any one of Claims 1 to 4, **characterised in that** there is a curved relationship between the correction value (Δ*_{VLT}*) and the signal value (E) in the first signal-section.

7. A thermal output controller for a heating plant (3), particularly for stipulating the flow temperature (□*_{HYL}*) and/or the mass flow (*m*) as regulating variable (U) for a heat generator (2) of the heating plant (3) as a function of reference variables (□*_{A}*), wherein the heat output controller (7) has a correction input (12) for connection to a correction output (11) of a supply state controller (6) according to any one of Claims 1 to 7, **characterised in that** the correction input (12) is constructed as a current or voltage interface which covers a predetermined signal range, wherein the signal range has a first signal section, in which a signal value (Σ) from the signal range is uniquely assigned to a correction value (Δ*_{VLT}*), and has a second signal section, to which a special function is assigned, wherein the signal range has a third signal section and/or the signal section is divided into a plurality of subsections.

8. The thermal output controller according to Claim 7, **characterised in that** the third signal section is divided into a plurality of subsections.

9. The thermal output controller according to any one of Claims 7 or 8, **characterised in that** the first signal section of the correction input (12) of the thermal output controller (7) is larger thatn the first signal section of the correction output (11) of the supply state controller (6).

10. The thermal output controller according to any one of Claims 7 to 9, **characterised in that** a limit value for invalid signal values (E) can be predetermined at the lower and/or upper edge of the signal range.

11. A signal interface between a supply state controller (6) according to any one of Claims 1 to 6 and a thermal output controller (7) according to any one of Claims 7 to 10, **characterised in that** the signal interface (11, 12) is realised by means of the predetermination of a characteristic for the supply state controller (6) and a characteristic for the thermal output controller (7).

12. The signal interface according to Claim 11, **characterised in that** the parameters of the characteristics can be set.

13. The signal interface according to Claim 11 or 12, **characterised in that** the signal interface between the correction output (11) of the supply state controller (6) and the correction input (12) of the thermal output controller (13) is formed by means of a two-wire line.

## Revendications

1. Régulateur d'état d'alimentation pour la régulation d'un flux allée ou la régulation de flux de masse, guidée en fonction des besoins en chaleur, d'un état d'alimentation de bâtiment ou d'un état d'alimentation de circuit de chauffage, le régulateur d'état d'alimentation (6) générant, en tenant compte de l'état d'alimentation (BST), qui est déduit des grandeurs de mesure (M) représentant la consommation de chaleur actuelle des surfaces de chauffage individuelles du bâtiment ou du circuit de chauffage, une valeur de correction (Δ_{VLT}) pour un régulateur de puissance de chauffage (7) d'une installation de chauffage (3) et présentant une sortie de correction (11) qui peut être raccordée à une entrée de correction (12) du régulateur de puissance de chauffage (7), **caractérisé en ce que** la sortie de correction (11) est conçue comme interface de courant ou interface de tension, qui couvre une plage de signal prédéfinie, la plage de signal présentant une première partie de signal, dans laquelle une valeur de correction (Δ_{VLT}) est attribuée clairement à une valeur de signal (Σ) provenant de la plage de signal, et une seconde partie de signal, à laquelle est attribuée une fonction spéciale, la plage de signal présentant une troisième partie de signal et/ou la seconde partie de signal étant subdivisée en plusieurs sous-parties pour l'attribution de différentes fonctions spéciales.

2. Régulateur d'état d'alimentation selon la revendication 1, **caractérisé en ce que** la seconde partie de signal se situe sur un bord de la plage de signal.

3. Régulateur d'état d'alimentation selon la revendication 2, **caractérisé en ce que** la troisième partie de signal se situe sur le bord, opposé à la seconde partie de signal, de la plage de signal.

4. Régulateur d'état d'alimentation selon l'une quelconque des revendications précédentes, **caractérisé en ce que** la troisième partie de signal est subdivisée en plusieurs sous-parties pour l'attribution de différentes fonctions spéciales.

5. Régulateur d'état d'alimentation selon l'une quelconque des revendications précédentes, **caractérisé en ce qu'**un rapport linéaire entre la valeur de correction (Δ_{VLT}) et la valeur de signal (Σ) existe dans la première partie de signal.

6. Régulateur d'état d'alimentation selon l'une quelconque des revendications 1 à 4, **caractérisé en ce qu'**un rapport incurvé entre la valeur de correction (Δ_{VLT}) et la valeur de signal (Σ) existe dans la première partie de signal.

7. Régulateur de puissance de chaleur pour une installation de chauffage (3), en particulier pour la spécification de la température aller (□_{HVL}) et/ou du flux de masse (□) comme grandeur de réglage (U) pour un générateur de chaleur (2) de l'installation de chauffage (3) en fonction de grandeurs de guidage (□_{A}), le régulateur de puissance de chaleur (7) présentant une entrée de correction (12) pour le raccordement à une sortie de correction (11) d'un régulateur d'état d'alimentation (6) selon l'une quelconque des revendications 1 à 7, **caractérisé en ce que** l'entrée de correction (12) est conçue sous forme d'interface de courant ou de tension, qui couvre une plage de signal prédéfinie, la plage de signal présentant une partie de signal, dans laquelle une valeur de signal (Σ) provenant de la plage de signal est attribuée clairement à une valeur de correction (Δ_{VLT}), et une seconde partie de signal, à laquelle est attribuée une fonction spéciale, la plage de signal présentant une troisième partie de signal et/ou la partie de signal étant subdivisée en plusieurs sous-parties.

8. Régulateur de puissance de chaleur selon la revendication 7, **caractérisé en ce que** la troisième partie de signal est subdivisée en plusieurs sous-parties.

9. Régulateur de puissance de chaleur selon l'une quelconque des revendications 7 ou 8, **caractérisé en ce que** la première partie de signal de l'entrée de correction (12) du régulateur de puissance de chaleur (7) est supérieure à la première partie de signal de la sortie de correction (11) du régulateur d'état d'alimentation (6).

10. Régulateur de puissance de chaleur selon l'une quelconque des revendications 7 à 9, **caractérisé en ce qu'**une valeur limite peut être prédéfinie pour des valeurs de signal (Σ) non valables sur le bord inférieur et/ou le bord supérieur de la plage de signal.

11. Interface de signal entre un régulateur d'état d'alimentation (6) selon l'une quelconque des revendications 1 à 6 et un régulateur de puissance de chaleur (7) selon l'une quelconque des revendications 7 à 10, **caractérisée en ce que** l'interface de signal (11, 12) est réalisée par la spécification d'une courbe caractéristique pour le régulateur d'état d'alimentation (6) et d'une courbe caractéristique pour le régulateur de puissance de chauffage (7).

12. Interface de signal selon la revendication 11, **caractérisée en ce que** les paramètres des courbes caractéristiques sont réglables.

13. Interface de signal selon la revendication 11 ou 12, **caractérisée en ce que** l'interface de signal entre la sortie de correction (11) du régulateur d'état d'alimentation (6) et l'entrée de correction (12) du régulateur de puissance de chaleur (13) est formée par une ligne bifilaire.
